# FASCICULE DE BREVET EUROPEEN

(11) **EP 1 530 519 B1**
(45) Date de publication et mention de la délivrance du brevet: **07.10.2009**
(21) Numéro de dépôt: 03758239.2
(22) Date de dépôt: 13.08.2003
(51) Int. Cl.: B42D 15/10

(54) **CARTE MULTICOUCHES PERSONNALISEE COMPORTANT DES AMORCES DE RUPTURE ET PROCEDE DE FABRICATION D'UNE TELLE CARTE**
MEHRSCHICHTIGE PERSONALISIERTE KARTE MIT EINE ANRISSSTELLE UND VERFAHREN ZU SEINER HERSTELLUNG
CUSTOMISED MULTI-LAYER CARD COMPRISING FRACTURE INITIATION SCORES AND METHOD OF PRODUCING ONE SUCH CARD

(30) Priorité: 13.08.2002 FR 0210281
(43) Date de publication de la demande: 18.05.2005
(73) Titulaire: Gemalto SA, 92190 Meudon (FR)
(72) Inventeur: LESUR, Jean-Luc, F-83700 SAINT RAPHAEL (FR)
(86) Numéro de dépôt international: PCT/FR2003/002532
(87) Numéro de publication internationale: WO 2004/016445

(56) Documents cités:
- EP-A- 0 496 988
- US-A- 4 343 851
- US-A- 4 469 353

## Description

La présente invention concerne un support multicouches personnalisé en forme générale de carte.

La présente invention concerne en particulier les cartes du type laminées, c'est à dire les cartes qui comportent plusieurs couches de matière plastique superposées et collées ensemble par laminage à chaud.

Généralement, comme décrit dans le document EP-A-0496 988 un support multicouches personnalisé en forme générale de carte, tel qu'une carte d'identification, comporte :
- un corps de carte qui est muni, sur une face supérieure, d'informations de personnalisation visibles depuis l'extérieur,
- une pellicule au moins partiellement transparente qui est fixée sur la face supérieure du corps de carte.

Sur la plupart des cartes laminées qui comportent des informations imprimées sur une face, par exemple des cartes bancaire et des cartes d'identité, l'adhésion entre le corps de carte et la pellicule transparente est obtenue en utilisant un revêtement adhésif.

Une couche de protection est souvent collée sur la face supérieure de la pellicule transparente, au moyen d'un revêtement adhésif, en vue de protéger la photo couleur ou le texte de personnalisation de la carte en plastique.

Par certains moyens, il est possible de séparer (« délaminer ») deux couches de la carte, ce qui permet à des personnes malintentionnées de modifier les informations de personnalisation, puis de recolle les deux couches l'une sur l'autre.

Actuellement, dans le domaine des cartes d'identité, il est reconnu que cette possibilité de séparer deux couches de la carte constitue une faiblesse importante des cartes en plastique pour garantir l'authenticité des informations qu'elles portent.

L'invention vise notamment à remédier à ces inconvénients.

Dans ce but, l'invention propose un support multicouches personnalisé en forme générale de carte, tel qu'une carte d'identification, conforme aux revendications 1 à 5.

L'invention propose aussi un procédé de fabrication d'un support multicouches personnalisé en forme générale de carte, tel qu'une carte d'identification, conforme aux revendications 6 à 8.

D'autres caractéristiques est avantages de l'invention apparaîtront à la lecture de la description détaillée qui suit pour la compréhension de laquelle on se reportera aux dessins annexés dans lesquels :
- la figure 1 est une vue en coupe qui représente schématiquement une carte multicouches personnalisée qui est réalisée conformément aux enseignements de l'invention ;
- la figure 2 est une vue de dessus qui représente schématiquement les informations de personnalisation et d'identification qui sont portées par la carte de la figure 1 ;
- les figures 3A, 3B, 3C, et 3D sont des vues similaires à celle de la figure 1 qui illustrent un procédé conforme aux enseignements de l'invention pour la fabrication de la carte de la figure 1.

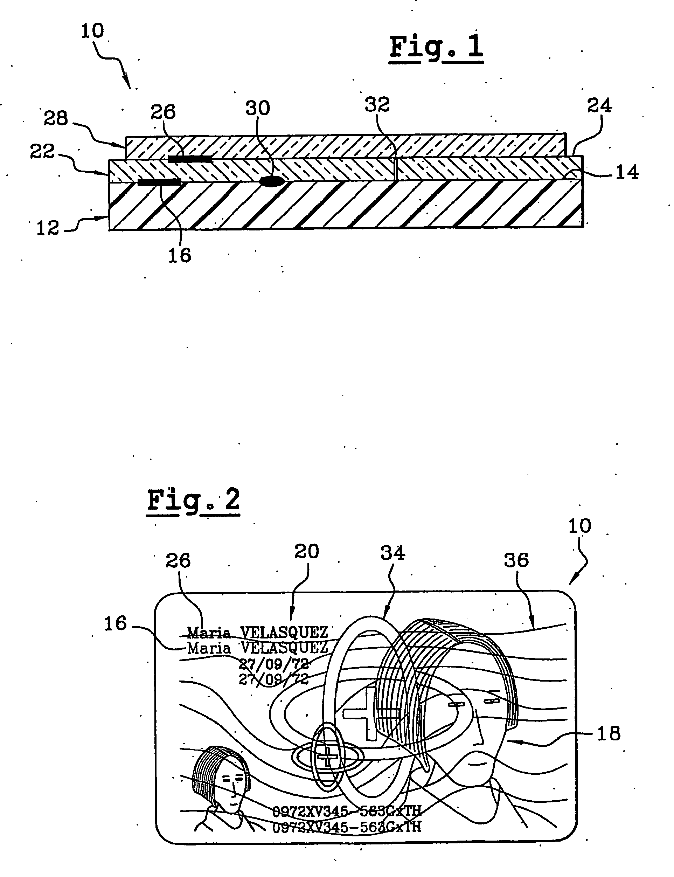

On a représenté sur les figures 1 et 2 un support multicouches personnalisé 10 qui est réalisé conformément aux enseignements de l'invention.

Le support multicouches personnalisé 10 est ici une carte d'identification, par exemple une carte nationale d'identité.

La carte 10 comporte un corps de carte 12 qui est réalisé dans une matière plastique opaque et qui porte, sur sa face supérieure 14, des informations de personnalisation 16 de la carte 10.

Le informations de personnalisation 16 comportent par exemple la représentation photographique 18 d'une personne et des caractères alphanumériques 20 relatifs à l'identité de la personne, tel que représenté sur la figure 2.

Une pellicule transparente 22 est collée sur la face supérieure 14 du corps de carte 12.

La pellicule 22 peut être partiellement transparente, c'est à dire qu'elle peut être transparente uniquement au-dessus des informations de personnalisation 16, celles-ci devant être visibles depuis l'extérieur.

Selon le mode de réalisation représenté ici, la pellicule 22 porte, sur sa face supérieure 24, des informations de personnalisation 26 redondantes, par rapport aux informations de personnalisation 16 portées par le corps de carte 12.

Sur la figure 2, les informations de personnalisation 16 portées par le corps de carte 12 sont représentées en traits fins, et les informations de personnalisation 26 portées par la pellicule 22 sont représentées en traits forts.

Avantageusement, un film transparent 28 formant couche de protection est collé sur la face supérieure 24 de la pellicule 22 et la recouvre.

Conformément aux enseignements de l'invention, la carte 10 comporte des lignes de démarcation 30, 32 qui délimitent des zones de la pellicule 22 de résistance mécanique réduite ou augmentée.

Les lignes de démarcation comportent ici des cordons de soudure 30 et des rainures 32, qui ont été représentées de manière schématique sur la figure 2.

Pour simplifier la représentation, un seul cordon de soudure 30 et une seule rainure 32 ont été représentés sur la figure 2.

Les cordons de soudure 30 sont- réalisés à l'interface entre la pellicule 22 et le corps de carte 12, de sorte qu'ils créent des zones dans lesquelles la résistance mécanique de la pellicule 22 au décollement est plus élevée que dans des zones de la pellicule 22 simplement collées sur le corps de carte 12.

Ainsi, en cas de tentative de décollement de la pellicule 22 par rapport au corps de carte 12, les portions de la pellicule 22 ne comportant pas de cordon de soudure 30 se décolleront plus facilement que les portions de la pellicule 22 comportant des cordons de soudure 30, qui resteront solidaires du corps de carte 12, ce qui entraînera le déchirement de la pellicule 22 au niveau de la liaison entre les deux types de portions en provoquant la fragmentation de la pellicule 22.

Les rainures 32 traversent ici toute l'épaisseur de la pellicule 22, ce qui forme des découpes dans la pellicule 22, de sorte que la liaison entre les portions de la pellicule 22 qui sont adjacentes à ces rainures 32 est fragilisée, donc peu résistante mécaniquement.

Ainsi, en cas de tentative de décollement de la pellicule 22 par rapport au corps de carte 12, les portions adjacentes aux rainures 32 se sépareront en provoquant la fragmentation de la pellicule 22.

La fragmentation de la pellicule 22 empêche sa réutilisation, et les portions de pellicule 22 qui restent fixées au corps de carte 12 par les cordons de soudure 30 altèrent l'état de surface du corps de carte 12.

Par conséquent, toute tentative de falsification de la carte 10 apparaît sous la forme de défauts visibles dans les couches 12, 22, 28 de la carte 10.

On note que les zones de résistance mécanique réduite ou augmentée dans la pellicule 22 forment des amorces de rupture puisque, en cas de tentative de décollement de la pellicule 22, celle-ci aura tendance à se rompre à la séparation entre les zone de résistance mécanique forte et les zones de résistance mécanique plus faible.

Selon une variante de réalisation (non représentée) de l'invention, les rainures 32 peuvent être réalisées sur l'une des faces de la pellicule 22, sans traverser entièrement la pellicule 22 dans son épaisseur. Un tel type de rainures 32 forme alors des amorces de rupture qui sont prévues pour se rompre en cas de tentative de décollement de la pellicule 22.

Avantageusement, comme on l'a représenté sur la figure 2, les cordons de soudure 30 et les rainures 32 peuvent être réalisés sous la forme de traits suffisamment fins pour permettre de dessiner des motifs 34, 36 visibles depuis l'extérieur à travers la pellicule 22 et le film 28.

Selon le mode de réalisation représenté ici, les cordons de soudure 30 et les rainures 32 dessinent un motif principal d'identification 34 qui peut représenter par exemple un logo ou un cachet, en vue de faciliter l'identification visuelle de la carte 10.

Les cordons de soudure 30 et les rainures 32 dessinent ici un motif secondaire 36 qui représente des lignes ondulées parcourant toute la surface de la carte 10. Ce motif secondaire 36 facilite la détection de défauts visibles sur la carte 1.0.

Avantageusement, les lignes de démarcation 30, 32 peuvent être agencées dans des zones sensibles de la carte 10, c'est à dire les zones les plus susceptible d'être décollées, par exemple autour de la représentation photographique 18 ou au voisinage des bords de la carte 10.

Bien entendu, les lignes de démarcation 30, 32 peuvent être discontinues et elles peuvent être formées par une série de points.

Selon une variante de réalisation (non représentée), les lignes de démarcation 30, 32 peuvent être constituées uniquement de cordons de soudure 30, ou uniquement de rainures 32.

En relation avec les figurée 3A à 3D, on décrit maintenant un procédé de fabrication de la carte 10 conforme aux enseignements de l'invention.

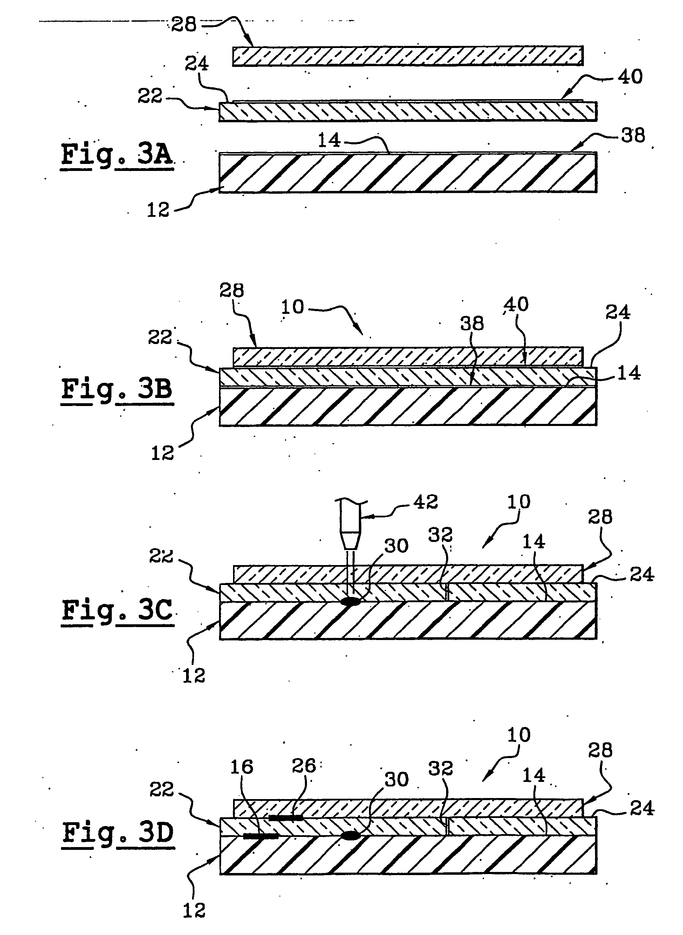

Au cours d'une première étape dite d'assemblage, qui est illustrée par les figures 3A et 3B, les deux premières couches 12, 22 formant la carte 10 sont fixées ensemble, ici par collage.

A cet effet, selon le mode de réalisation représenté sur la figure 3A, une première couche 38 de revêtement adhésif est déposée sur la face inférieure 15 de la pellicule transparente 22.

Le corps de carte 12 est la pellicule 22 sont ensuite superposés dans le sens de leur épaisseur, puis ces deux couches 12, 22 sont laminées à chaud ce qui termine l'étape d'assemblage.

Bien entendu, la fixation de la pellicule 22 sur le corps de carte 12 peut se faire par d'autres moyens, par exemple par des moyens de fixation à froid, par réticulation etc.

Au cours d'une deuxième étape dite de personnalisation, qui est illustrée par la figure 3B, les informations de personnalisation 16, 26 sont reportées sur la carte 10.

Selon le mode de réalisation représenté ici, les informations de personnalisation 26 sont imprimées sur la face supérieure 24 de la pellicule transparente 22, par exemple par transfert thermique, ou par tout autre moyen d'impression approprié.

Les informations de personnalisation 16 sont reportées sur la face supérieure 14 du corps de carte 12 au moyen d'un faisceau laser 42.

Au cours d'une troisième étape dite de sécurisation, les lignes de démarcation, ici des cordons de soudure 30 et des rainures 32, sont réalisées au moyen d'un faisceau laser 42 qui traverser la pellicule transparente 22.

Les cordons de soudure 30 et les rainures 32 sont obtenus en choisissant une puissance déterminée du faisceau laser 42 et éventuellement en choisissant un point de focalisation déterminé du faisceau laser 42 dans l'épaisseur de la pellicule 22.

Le choix de la fréquence des impulsions laser, la vitesse de déplacement du faisceau laser 42, ainsi que le choix du matériau constituant la pellicule transparente 22, ont aussi une influence sur l'effet technique obtenu par le faisceau laser 42.

Le corps de carte 12 étant opaque, le faisceau laser 42 peut traverser la couche transparente 22, mais il est arrêté à l'interface entre le corps de carte 12 et la pellicule 22.

On note que la réalisation de l'étape de sécurisation au moyen d'un faisceau laser 42 permet de réaliser des rainures 32 de formes variables, par exemple de la même forme que les données de personnalisation 16 ou 26.

Avantageusement, le faisceau laser 42 utilisé, pour réaliser les lignés de démarcation 30, 32 est du même type que celui qui est utilisé pour personnaliser la carte 10.

Au cours d'une quatrième étape dite de protection, qui est représentée sur la figure 3D, le film transparent de protection 28 est fixé sur la face supérieure 24 de la pellicule transparente 22, par exemple par collage 40.

Selon une variante de réalisation (non représentée) du procédé selon l'invention, l'étape de sécurisation peut être mise en oeuvre après l'étape de protection. Dans ce cas, les rainures 32 réalisées au moyen du laser 42 traversent le film transparent 28 et la pellicule 22.

Cette variante de réalisation présente l'avantage de permettre la sécurisation de toutes les couches 12, 22, 28 de la carte 10 en une seule fois, y compris la sécurisation d'une couche en papier s'il y en a une.

On note que l'étape de sécurisation peut être mise en oeuvre savant ou après l'étape de personnalisation. Elle peut aussi être mise en oeuvre entre le report des informations de personnalisation 26 et le report- des informations de personnalisation 16.

Bien entendu, les rainures 32, formant amorces de rupture dans la pellicule 22, peuvent aussi être réalisées par des moyens mécaniques. Mais, dans l'application de l'invention à des cartes multicouches laminées 10, il est préférable, notamment pour des raisons de coût et de simplicité de fabrication, d'utiliser l'apport localisé de chaleur après l'étape d'assemblage.

Le procédé selon l'invention permet de sécuriser la carte 10 de manière économique, avec une grande précision de positionnement des lignes de démarcation 30, 32.

Selon une variante de réalisation (non représentée) du procédé selon l'invention, l'apport localisé de chaleur permettant de former les cordons de soudure 30 peut être réalisé par marquage à chaud en utilisant des masques de chauffage.

Le dessin du masque est déterminé par la position des zones sensibles de la carte 10, par exemple de la représentation photographique.

Le masque est appliqué sur la carte 10 par une machine telle qu'une presse à chaud pour la dépose d'hologrammes et la réalisation de plaques de signature.

Le masque chauffe les- couches de plastique 12, 22, 28 jusqu'à faire fondre le plastique pour souder les différentes couches 12, 22, 28 entre elles.

Le chauffage du plastique peut être obtenu par préchauffage du masque, par exemple au moyen d'un système électrique, ou directement par des hautes fréquences ou des micro-ondes.

L'invention vise également à obtenir un support personnalisé dont les lignes de démarcation sont réalisées de telle manière qu'elles correspondent à une découpe de la pellicule située à la surface de la carte avec un marquage et/ou brûlage de la surface adjacente inférieur le long et à l'aplomb des ces lignes. Le marquage et/ou le brûlage peuvent s'accompagner également d'une soudure des bords de la rainure, résultant de la découpe, avec la surface adjacente. Ces opérations sont réalisées en un seul passage voire deux d'un faisceau laser. L'invention se distingue notamment en ce qu'à l'aplomb et le long des rainures résultant des lignes de découpe se trouvent des marques et/ou des soudures sur la surface inférieure au contact de la pellicule.

## Revendications

1. Support multicouches personnalisé (10), tel qu'une carte d'identification, comportant :
- un corps de carte (12) qui est muni, sur une face supérieure (14) d'informations de personnalisation (16) visibles depuis l'extérieur,
- une pellicule (22) au moins partiellement transparente qui est fixée sur la face supérieure (14) du corps de carte (12),
- des lignes de démarcation (30, 32) qui délimitent des zones de la pellicule de résistance mécanique réduite ou augmentée, formant des amorces de rupture, de manière que la pellicule (22) se fragmente en cas de tentative de décollement de celle-ci, les lignes de démarcation (30, 32) dessinant au moins un motif d'identification (34) visible depuis l'extérieur et comportant des cordons de soudure (30) réalisés à l'interface entre la pellicule (22) et le corps de carte (12),
**caractérisé en ce que** les lignes de démarcation (30, 32) sont obtenues au moyen d'un faisceau laser, et le motif (34) qu'elles dessinent correspond à des données ou motifs variables.

2. Support (10) selon la revendication 1, **caractérisé en ce que** les lignes de démarcation comportent en outre des rainures (32) formées dans au moins une des faces de la pellicule (22).

3. Support (10) selon la revendication 2, **caractérisé en ce que** les rainures (32) traversent la pellicule (22) dans toute son épaisseur.

4. Support (10) selon l'une quelconque des revendications précédentes, **caractérisé en ce que** les lignes de démarcation comportent des rainures (32) sur au moins une face de la pellicule transparente (22) et des marques et/ou soudures à l'interface entre la pellicule transparente (22) et le corps de carte (12) adjacent.

5. Support (10) selon l'une quelconque des revendications précédentes, **caractérisé en ce que** la face supérieure (24) de la pellicule transparente (22) est recouverte par une couche protectrice transparente (28).

6. Procédé de fabrication d'un support multicouches personnalisé (10) , tel qu'une carte d'identification, du type comportant :
- une étape dite d'assemblage, au cours de laquelle une pellicule (22) au moins partiellement transparente est fixée sur la face supérieure (14) d'un corps de carte (12),
- une étape dite de personnalisation, au cours de laquelle des informations de personnalisation (16) sont agencées sur la face supérieure (14) du corps de carte (12), de manière que les informations de personnalisation (16) soient visibles depuis l'extérieur à travers la pellicule au moins partiellement transparente (22),
- une étape dite de sécurisation est mise en oeuvre, au cours de laquelle sont formées des lignes de démarcation (30, 32) qui délimitent des zones de la pellicule de résistance mécanique réduite ou augmentée, formant des amorces de rupture, en vue de provoquer une fragmentation de la pellicule (22) en cas de tentative de décollement de celle-ci, lesdites lignes de démarcation (30, 32) dessinant au moins un motif d'identification (34) visible depuis l'extérieur et comportant des cordons de soudure (30) réalisés à l'interface entre la pellicule (22) et le corps de carte (12),
**caractérisé en ce que** les lignes de démarcation (30, 32)' sont réalisées au moyen d'un faisceau laser (42).

7. Procédé selon la revendication 6, **caractérisé en ce qu'**on forme les lignes de démarcation en réalisant en outre des rainures (32) sur au moins une face de la pellicule transparente (22).

8. Procédé selon la revendication 6 ou 7, **caractérisé en ce que** l'on forme les lignes de démarcation en réalisant des rainures (32) sur au moins une face de la pellicule transparente (22) et des marques et/ou soudures à l'interface entre la pellicule transparente (22) et le corps de carte (12) adjacent, à l'aplomb des rainures.

## Claims

1. A personalised multilayer support (10) such as an identification card, comprising :
- a card body (12) which is provided, on an upper face (14), with personalisation information (16) visible from the outside;
- an at least partially transparent film (22) which is fixed on the upper face (14) of the card body (12);
- demarcation lines (30, 32) which delimit areas of the film of reduced or increased mechanical strength, forming tear scores, so that the film (22) is torn in the event of an attempt to peel off it, the demarcation lines (30, 32) forming at least one identification pattern (34) visible from the outside and comprising weld beads (30) made at the interface between the film (22) and the card body (12);
**characterised in that** the demarcation lines (30, 32) are obtained by means of a laser beam, and the pattern (34) they form corresponds to variable data or patterns.

2. A support (10) according to Claim 1, **characterised in that** the demarcation lines furthermore comprise grooves (32) formed in at least one of the faces of the film (22).

3. A support (10) according to Claim 2, **characterised in that** the grooves (32) go through the film (22) in its entire thickness.

4. A support (10) according to any one of the preceding claims, **characterised in that** the demarcation lines comprise grooves (32) on at least one face of the transparent film (22) and marks and/or welds at the interface between the transparent film (22) and the adjacent card body (12).

5. A support (10) according to any one of the preceding claims, **characterised in that** the upper face (24) of the transparent film (22) is covered by a transparent protective layer (28).

6. A method of manufacturing a personalised multilayer support (10), such as an identification card, of the type comprising:
- a so-called assembly step, during which an at least partially transparent film (22) is fixed on the upper face (14) of a card body (12);
- a so-called personalisation step, during which personalisation information (16) is arranged on the upper face (14) of the card body (12), so that the personalisation information (16) is visible from the outside through the at least partially transparent film (22);
- a so-called securing step is implemented, during which there are formed demarcation lines (30, 32) which delimit areas of the film of reduced or increased mechanical strength, forming tear scores, with a view to causing fragmentation of the film (22) in the event of an attempt to detach it, said demarcation lines (30, 32) forming at least one identification pattern (34) visible from the outside and comprising weld beads (30) made at the interface between the film (22) and the card body (12);
**characterised in that** the demarcation lines (30, 32) are made by means of a laser beam (42).

7. A method according to Claim 6, **characterised in that** the demarcation lines are formed by furthermore making grooves (32) on at least one face of the transparent film (22).

8. A method according to Claim 6 or 7, **characterised in that** the demarcation lines are formed by making grooves (32) on at least one face of the transparent film (22) and marks and/or welds at the interface between the transparent film (22) and the adjacent card body (12), vertically in line with the grooves.

## Patentansprüche

1. Benutzerdefinierter Mehrschichtträger (10), wie zum Beispiel eine Kennkarte, der folgende Elemente umfaßt:
- Einen Kartenkörper (12), der auf einer Oberseite (14) mit von außen sichtbaren persönlichen Angaben (16) versehen ist;
- Einen mindestens teilweise transparenten Film (22), der auf der Oberseite (14) des Kartenkörpers (12) befestigt ist ;
- Grenzlinien (30, 32), die Zonen des Films mit reduzierter oder größerer mechanischer Festigkeit abgrenzen, die Anrisse bilden, so daß der Film (22) bei Ablösungsversuchen splittert, wobei die Grenzlinien (30, 32) mindestens ein Kennmotiv (34) zeichnen, das von außen sichtbar ist und die Schweißnähte (30) umfaßt, die an der Schnittstelle zwischen dem Film (22) und dem Kartenkörper (12) ausgeführt wurden,
**dadurch gekennzeichnet, daß** die Grenzlinien (30, 32) vermittels eines Laserstrahls erzielt werden und das von ihnen gezeichnete Motiv (34) variablen Daten oder Motiven entspricht.

2. Träger (10) nach Anspruch 1, **dadurch gekennzeichnet, daß** die Grenzlinien außerdem Rillen (32) umfassen, die in mindestens einer der Seiten des Films (22) gebildet sind.

3. Träger (10) nach Anspruch 2, **dadurch gekennzeichnet, daß** die Rillen (32) die gesamte Dicke des Films (22) durchqueren.

4. Träger (10) nach einem beliebigen der vorstehenden Ansprüche, **dadurch gekennzeichnet, daß** die Grenzlinien auf mindestens einer Seite des transparenten Films (22) Rillen (32) umfassen sowie Markierungen und/oder Schweißungen an der Schnittstelle zwischen dem transparenten Film (22) und dem angrenzenden Kartenkörper (12).

5. Träger (10) nach einem beliebigen der vorstehenden Ansprüche, **dadurch gekennzeichnet, daß** die Oberseite (24) des transparenten Films (22) mit einer transparenten Schutzschicht (28) abgedeckt ist.

6. Verfahren für die Herstellung eines benutzerdefinierten Mehrschichtträgers (10), wie zum Beispiel eine Kennkarte von der Art, die folgende Schritte umfaßt:
- Einen sogenannten Montageschritt, in dessen Verlauf ein mindestens teilweise transparenter Film (22) auf der Oberseite (14) eines Kartenkörpers (12) befestigt ist;
- Einen Schritt mit der sogenannten Benutzerdefinition, in dessen Verlauf persönliche Angaben (16) auf der Oberseite (14) des Kartenkörpers (12) aufgebracht werden, so daß die persönlichen Angaben (16) von außen durch den zumindest teilweise transparenten Film (22) hindurch sichtbar sind;
- Es folgt ein sogenannter Sicherungsschritt, in dessen Verlauf Grenzlinien (30, 32) gebildet werden, die Zonen des Films mit reduzierter oder größerer mechanischer Festigkeit abgrenzen, die Anrisse bilden, damit bei Ablösungsversuchen ein Splittern des Films (22) ausgelöst wird, wobei die Grenzlinien (30, 32) mindestens ein Kennmotiv (34) zeichnen, das von außen sichtbar ist und die Schweißnähte (30) umfaßt, die an der Schnittstelle zwischen dem Film (22) und dem Kartenkörper (12) ausgeführt wurden,
**dadurch gekennzeichnet, daß** die Grenzlinien (30, 32) vermittels eines Laserstrahls (42) ausgeführt sind.

7. Verfahren nach Anspruch 6, **dadurch gekennzeichnet, daß** die Grenzlinien gebildet werden, indem gleichzeitig Rillen (32) auf mindestens einer Seite des transparenten Films (22) ausgeführt werden.

8. Verfahren nach Anspruch 6 oder 7, **dadurch gekennzeichnet, daß** die Grenzlinien gebildet werden, indem gleichzeitig Rillen (32) auf mindestens einer Seite des transparenten Films (22) ausgeführt werden, und Markierungen und/oder Schweißnähte an der Schnittstelle zwischen dem transparenten Film (22) und dem angrenzenden Kartenkörper (12) senkrecht an den Rillen.
